# EUROPEAN PATENT APPLICATION

(11) **EP 4 708 426 A1**
(43) Date of publication of application: **11.03.2026**
(21) Application number: 25195412.9
(22) Date of filing: 12.08.2025
(51) Int. Cl.: H01M 10/052, H01M 50/534, H01M 50/536, H01M 50/571

(54) **LEAD TAB WITH IMPROVED WELDING PERFORMANCE**

(30) Priority: 26.08.2024 KR 20240114645
(71) Applicant: Flexion Co., Ltd, Jeongeup-si, Jeollabuk-do 56137 (KR)
(72) Inventor: YU, Jinha, 56137 Jeongeup-si (KR); NOH, Hyeongwan, 56137 Jeongeup-si (KR); CHOI, Sunghoon, 56137 Jeongeup-si (KR)
(74) Representative: Ter Meer Steinmeister & Partner

(57) **Abstract**

The present invention provides a lead tab comprising: a metal substrate including aluminum; and a metal layer disposed on both sides of the metal substrate; wherein the metal layer comprises 70 to 99.9 wt% of chromium and wherein the lead tab has an ultrasonic welding strength of 70 kgf/mm² or more.

## Description

This application claims the benefit of priority of the Korean Patent Application No. 10-2024-0114645 filed on August 26, 2024.

### BACKGROUND

### Field of the Invention

The present invention relates to a lead tab having improved welding performance.

### Discussion of the Related Art

The secondary battery industry is in the spotlight as a core component of IT devices along with semiconductors and displays. Recently, its use is increasing for electric bicycles, hybrid vehicles (HEVs), electric vehicles (EVs), plug-in hybrid vehicles (PHEVs), and energy storage systems (ESS) that use large-capacity batteries.

Typical secondary battery has a lead tab provided to extract electricity to the outside. In a secondary battery, one end of the lead tab is connected to the battery element and is pressed against the opposing film, and the other end protrudes to the outside of the film.

If a physical external force is applied to a secondary battery, the bonding strength of the welding portions of the lead tabs and electrode tabs may weaken, causing some or all of them to be cut off. In this state, if a large amount of current flows in a short period of time, there is a risk of ignition or explosion as the battery heats up.

To solve these problems, research is continuously being conducted on lead tabs with improved welding performance.

### SUMMARY

The present invention relates to a lead tab with improved welding performance, which can prevent problems caused by the limitations and disadvantages of the related technologies as described above.

One embodiment of the present invention provides a lead tab comprising: a metal substrate including aluminum; and a metal layer disposed on both sides of the metal substrate; wherein the metal layer comprises 70 to 99.9 wt% of chromium and wherein the lead tab has an ultrasonic welding strength of 70 kgf/mm² or more.

In one or more embodiments, the metal substrate may have a thickness of 100 to 1,000 µm.

In one or more embodiments, the metal layer may have a thickness of 10 to 500 nm.

In one or more embodiments, the metal layer may be formed by a dry vacuum process.

In one or more embodiments, the dry vacuum process may comprise at least one of a sputtering process, an evaporation process, an ion plating process, and a CVD process.

In another aspect a secondary battery is provided comprising the lead tab as described above.

### BRIEF DESCRIPTION OF THE DRAWINGS

The above and other objects, features and other advantages of the present disclosure will be more clearly understood from the following detailed description taken in conjunction with the accompanying drawings, in which:
FIG. 1 is a perspective view of a secondary battery of one embodiment of the present invention.
FIG. 2 is a cross-sectional view of a lead tab of one embodiment of the present invention.
FIG 3 is a cross-sectional view taken along line I-I' of FIG 1.
FIG. 4 is a conceptual diagram schematically illustrating part of a sputtering device.

### DETAILED DESCRIPTION OF THE DISCLOSURE

Hereinafter, embodiments of the present disclosure will be described in detail with reference to the accompanying drawings. However, the embodiments described below are presented only for illustrative purposes to facilitate a clear understanding of the present disclosure and do not limit the scope of the present disclosure.

Shapes, sizes, ratios, angles, numbers, and the like disclosed in the drawings for describing the embodiments of the present disclosure are illustrative, and thus the present disclosure is not limited to the details illustrated in the drawings. Throughout the present specification, the same components may be referred to by the same reference numerals. In describing the present disclosure, detailed descriptions of related known technologies will be omitted when it is determined that they may unnecessarily obscure the gist of the present disclosure.

When terms "including," "having," "consisting of," and the like described in the present specification are used, other parts may be added unless the term "only" is used herein. When a component is expressed in the singular form, the plural form is included unless otherwise specified. In addition, in interpreting a component, it is interpreted as including an error range even when not explicitly stated.

In describing a positional relationship, for example, when a positional relationship of two parts is described as being "on," "above," "below, "next to," or the like, unless "immediately" or "directly" is used, one or more other parts may be located between the two parts.

Spatially relative terms, such as "below," "beneath," "lower," "above," "upper" and the like, may be used herein for ease of description to describe one element or component's relationship to another element(s) or component(s) as illustrated in the drawings. It will be understood that the spatially relative terms are intended to include different orientations of the element in use or operation in addition to the orientation illustrated in the drawings. For example, when an element in the drawings is turned over, an element described as being "above" or "upper" relative to another element will then be "below" or "lower" relative to the other element. Thus, the exemplary term "below" may include both above and below orientations. Likewise, the exemplary terms "above" or "upper" may include both above and below orientations.

In describing a temporal relationship, for example, when a temporal relationship is described as being "after," "subsequent," "next to," "prior to," or the like, unless "immediately" or "directly" is used, cases that are not continuous may also be included.

In order to describe various components, terms such as "first," "second," and the like are used, but these components are not limited by these terms. These terms are only used to distinguish one component from another component. Accordingly, a first component described below may be a second component within the technical concept of the present disclosure.

The term "at least one" should be understood to include all possible combinations from one or more related items. For example, the meaning of "at least one of first, second, and third items" may mean all combinations of two or more items of the first, second and third items as well as each of the first, second and third items.

The features of various embodiments of the present disclosure may be partially or wholly coupled to or combined with each other, and may be various technically linked or operated, and each of the embodiments may be implemented independently of each other or may be implemented together in a related relationship.

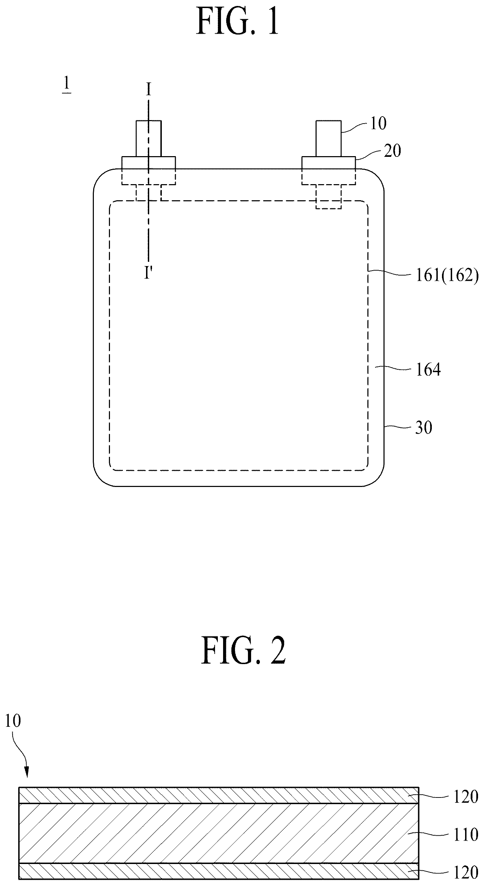

FIG. 1 is a perspective view of a secondary battery (1) of one embodiment of the invention.

FIG. 2 is a cross-sectional view of a lead tab (10) of one embodiment of the present invention.

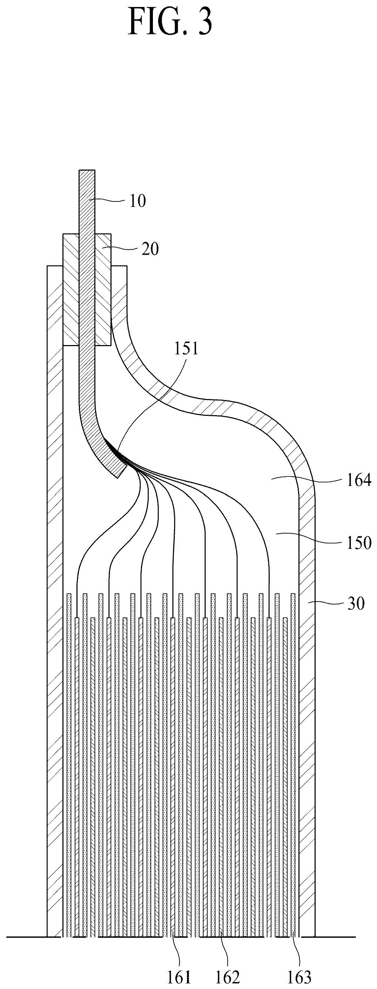

FIG 3 is a cross-sectional view taken along line I-I' of FIG 1.

There is no particular limitation on the type of secondary battery (1) according to one embodiment of the present invention, but it may preferably be a lithium secondary battery.

Referring to FIGS. 1 and 3, a secondary battery (1) according to one embodiment of the present invention is configured such that a film-shaped negative electrode (161) and a film-shaped positive electrode (162) are disposed in a state of being overlapped with each other via a separator (163), and an electrolyte (164) is disposed between the negative electrode (161) and the positive electrode (162) so as to enable charging and discharging by the transfer of lithium ions. The secondary battery (1) including the negative electrode (161), the positive electrode (162), and the electrolyte (164) is covered in a liquid-tight state by an outer case (30). Specifically, the negative electrode (161), the positive electrode (162), and the electrolyte (164) are sealed inside the outer case (30) to protect them from the outside. In addition, the negative electrode (161) is formed as a structure in which a secondary battery copper foil is used as an negative electrode collector and a negative electrode active material slurry is coated thereon. Likewise, the positive electrode (162) is formed with a structure in which a positive electrode active material slurry is coated on a positive electrode current collector such as aluminum.

In addition, although not shown in the drawing, the lead tab (10) may be composed of a negative lead tab and a positive lead tab. More specifically, the lead tab (10) disposed on the left side of Fig. 1 may be a positive lead tab, and the lead tab (10) disposed on the right side may be a negative lead tab.

Referring to Fig. 1, a sealing tape (20) is disposed on one side of the outer case (30) of the secondary battery (1). The sealing tape (20) is intended to further improve the adhesiveness between the lead tab (10) and the outer case (30). The sealing tape (20) is disposed on the lead tab (10), and a portion of the sealing tape (20) is in close contact with the inner surface of the outer case (30) to seal the outer case (30). The sealing tape (20) has a function of preventing leakage of a liquid such as an electrolyte (164) sealed inside the outer case (30). In addition, the sealing tape (20) is disposed between the lead tab (10) and the outer case (30) to secure insulation between the lead tab (10) and the outer case (30). A polypropylene film is used as the sealing tape (20). However, one embodiment of the present invention is not limited thereto, and may be formed of a polymer-based composite.

Referring to Fig. 1, one end of the lead tab (10) is connected to one of the positive electrode (161) and the negative electrode (162), and the other end of the lead tab (10) is exposed to the outside of the outer body (30).

As illustrated in FIG. 2, the lead tab (10) of the present invention includes a metal substrate (110) including aluminum (Al) and a metal layer (120) on the metal substrate (110). The metal substrate (110) and the metal layer (120) are described in detail below.

Referring to FIG. 3, a plurality of electrode tabs (150) protruding from a negative electrode (161) are integrally combined to form a pre-welding portion (151), and a lead tab (10) is electrically connected to the upper portion of the pre-welding portion (151) by welding.

For example, in the case of ultrasonic welding as a welding method, when ultrasonic vibration is applied, frictional heat causes plastic deformation, allowing the lead tab (10) to penetrate and closely adhere to the pre-welding portion (151), which is formed by integrally bonding the electrode tabs (150).

The material of the metal substrate (110) is not particularly limited, but may be formed of aluminum or copper. According to one embodiment of the present invention, the metal substrate (110) may be formed of aluminum.

According to one embodiment of the present invention, the metal substrate (110) may have a thickness of 100 to 1,000 µm. Preferably, it may have a thickness of 100 to 500 µm.

According to one embodiment of the present invention, the lead tab (10) may further include a metal layer (120) on the metal substrate (110).

The metal layer (120) contains 70.0 to 99.9 wt%(w/w) chromium (Cr).

Specifically, the metal layer (120) can be formed by a dry vacuum process. For example, the metal layer (120) can be formed by any one of a sputtering process, an evaporation process, an ion plating process, and a CVD process as examples of the dry vacuum process. Preferably, the metal layer (120) can be formed by a sputtering process.

In general, the lead tab further includes a protective layer containing a chromium compound to improve corrosion resistance. At this time, the protective layer is formed through chromate treatment. However, the protective layer formed by the chromate treatment may have a very high oxygen fraction in the protective layer. At this time, the oxygen fraction means the ratio of oxygen to the total number of atoms in the protective layer. A protective layer with a very high oxygen fraction may cause the metal layer in contact with the protective layer to be excessively oxidized, thereby reducing the adhesion between the lead tab and the insulating film, and may cause the welding performance between the lead tab and the electrode tabs to deteriorate, thereby weakening the bonding strength at the welding area of the lead tab and the electrode tabs, which may cause part or all of the welding area to be cut off. In this state, if a large current flows in a short period of time, there is a risk of ignition or explosion as the battery is heated.

In addition, in the case of a protective layer formed by chromate treatment, some trivalent chromium (Cr3+) or hexavalent chromium (Cr6+) may exist within the protective layer. At this time, the hexavalent chromium (Cr6+) existing within the protective layer may have a strong oxidizing power. As a result, the metal layer in contact with the protective layer may be excessively oxidized, which may reduce the adhesion between the lead tab and the insulating film, and the welding performance between the lead tab and the electrode tabs may deteriorate, which may weaken the bonding strength of the welding area between the lead tab and the electrode tabs.

Therefore, according to one embodiment of the present invention, in order to increase the adhesion between the lead tab (10) and the sealing tape (20) and improve the welding performance between the lead tab (10) and the electrode tabs (150), the metal layer (120) needs to include 70.0 to 99.9 wt% of chromium (Cr).

According to one embodiment of the present invention, when the metal layer (120) is deposited by sputtering and contains 70.0 to 99.9 wt% of chromium (Cr), the oxygen fraction in the metal layer (120) is sufficiently reduced to achieve the purpose, thereby increasing the adhesion between the lead tab (10) and the sealing tape (20) and improving the welding performance between the lead tab (10) and the electrode tabs (150).

In addition, according to one embodiment of the present invention, when the metal layer (120) is deposited by a sputtering process and includes 70.0 to 99.9 wt% (w/w) of chromium (Cr), the influence of hexavalent chromium (Cr6+) in the metal layer (120) is reduced, so that the occurrence of human toxicity problems and environmental problems can be suppressed.

The lead tab (10) according to one embodiment of the present invention can have an ultrasonic welding strength of 70 kgf/mm² or more. The ultrasonic welding strength of the lead tab (10) is measured by welding the lead tab (10) and 30 sheets of aluminum foil that have been pre-welded, and then holding the welded lead tab (10) and 30 sheets of aluminum foil that have been pre-welded with a gripper, and then measuring the tensile strength. At this time, the ultrasonic welding strength means the measured tensile strength. The method of measuring the ultrasonic welding strength according to one embodiment of the present invention is described in detail below.

According to one embodiment of the present invention, when the lead tab (10) has an ultrasonic welding strength of 70 kgf/mm² or more, the bonding strength of the welding area of the lead tab and the electrode tabs is improved, so that the problem of part or all of welding area being cut off can be suppressed or prevented, and even if a large amount of current flows in a short period of time in this state, the risk of ignition or explosion can be reduced. Preferably, the lead tab (10) may have an ultrasonic welding strength of 80 kgf/mm² or more.

On the other hand, if the lead tab (10) has an ultrasonic welding strength of less than 70 kgf/mm², the bonding strength at the welding area of the lead tab and the electrode tabs may be reduced, causing a problem in which part or all of the welding area is cut off, and if a large amount of current flows in a short period of time in this state, there may be a risk of ignition or explosion as the battery heats up.

According to one embodiment of the present invention, the metal layer (120) may have a thickness of 10 to 500 nm.

When the metal layer (120) has a thickness of less than 10 nm, the metal layer (120) may be deposited unevenly, and as a result, when forming the secondary battery (1), the sealing tape (20) disposed on the metal layer (120) may be deposited unevenly, which may cause a problem in that the electrolyte (164) inside the secondary battery (1) may leak.

In addition, when the metal layer (120) exceeds a thickness of 500 nm, the internal stress within the metal layer (120) increases, causing a problem of cracks. Based on this, the metal layer (120) according to the embodiment of the present invention needs to have a thickness of 10 to 500 nm. Preferably, the metal layer (120) can have a thickness of 10 to 200 nm.

Below, a method for manufacturing a lead tab (10) according to one embodiment of the present invention is specifically described.

First, prepare a metal substrate (110).

The metal substrate (110) may have a thickness of 100 to 1,000 µm, and although the material is not particularly limited, it may be formed of aluminum or copper. According to one embodiment of the present invention, the metal substrate (110) may be aluminum.

Next, a metal layer (120) can be formed on the metal substrate (110) through a sputtering process using a DC sputtering device. The metal layer (120) can have a thickness of 10 to 500 nm.

At this time, chromium (Cr) metal is used as the sputtering target.

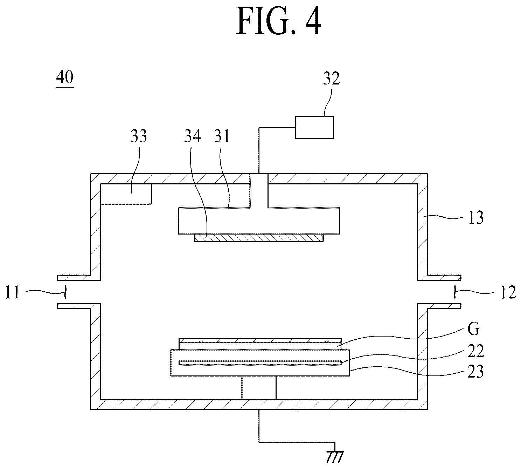

Figure 4 is a conceptual diagram schematically illustrating a part of a sputtering device (40).

According to one embodiment of the present invention, a metal layer (120) is formed on a metal substrate (110) through a process using the sputtering device (40).

According to one embodiment of the present invention, a sputtering device (40) may be provided with a chamber (13). A gas injection unit (11) may be disposed on one side of the chamber (13), and a gas discharge unit (12) may be disposed on the other side of the chamber (13).

In this regard, FIG. 4 illustrates a case where a gas injection unit (11) is disposed on the left side of the chamber (13) and a gas discharge unit (12) is disposed on the right side of the chamber (13), but one embodiment of the present invention is not limited thereto, and both the gas injection unit (11) and the gas discharge unit (12) may be disposed on the lower side of the chamber (13).

The gas injection unit (11) provides a path for sputtering gas to be injected from the outside of the chamber (13) into the inside of the chamber (13). Here, the sputtering gas corresponds to the gas, and specifically means a gas used for generating plasma used in the sputtering process. The sputtering gas is injected into the inside of the chamber (13) through the gas injection unit (11), and can be ionized by a voltage applied inside the chamber (13) to become a plasma state in which electrons, ions (for example, Ar+ ions), and neutral gas are mixed. In one embodiment, the sputtering gas may be a gas mixed with argon gas and nitrogen gas, or may be oxygen or nitrogen dioxide (NO₂).

Although not shown in Fig. 4, the gas injection unit (11) may be connected to a gas flow rate control device (not shown), a gas storage device (not shown), etc., disposed outside the chamber (13). The gas stored in the gas storage device may be injected into the chamber (13) through the gas injection unit (11) in an amount controlled by the gas flow rate control device.

The gas discharge unit (12) serves to pump air inside the chamber (13) to the outside in order to maintain the inside of the chamber (13) in a vacuum state. Although not shown in Fig. 4, the gas discharge unit (12) is connected to a vacuum pump (not shown) to control the amount of air exhausted from the inside of the chamber (13) to the outside.

Inside the chamber (13), a substrate support (23), a substrate (G) on the substrate support (23), a heating member (22), a target (34), a target support (31), and a control unit (33) are disposed.

The substrate support (23) is disposed at the lower part of the chamber (13) and serves to secure the substrate (G) introduced into the chamber (13). In addition, a heating member (22) may be further disposed inside the substrate support (23) to heat the substrate (G) secured on the substrate support (23) to a predetermined temperature. This heating member (22) applies a predetermined amount of heat to the substrate (G) secured on the substrate support (23) to enhance the reactivity with the deposition material deposited on the upper part of the substrate (G).

According to one embodiment of the present invention, the substrate (G) on the substrate support (23) is a metal substrate (110).

A target (34) made of a deposition material to be deposited on the upper surface of the substrate (G) is disposed on the upper portion of the substrate support (23), and the target (34) is fixed to the upper inner wall of the chamber (13) by the target support (31). A power supply (32) for applying voltage to the target (34) is connected to one side of the target (34), and the substrate support (31) is grounded. In addition, a magnet (not shown) may be further provided on the rear surface of the target (34), and this magnet serves to confine electrons formed in the chamber (13) near the target (34).

When a negative charge is applied to the target (34), it reacts with the sputtering gas, such as argon (Ar), injected into the chamber (13), ionizing the sputtering gas, and the ionized sputtering gas collides with the target (34). Here, the sputtering gas ionized by the magnet provided on the rear surface of the target (34) continuously collides with the target (34), and the deposition material separated from the target (34) thereby accelerates toward the substrate (G) and is deposited on the upper surface of the substrate (G).

Next, the vaporized deposition material sprayed inside the chamber (13) moves toward the substrate (G), so that a uniform metal layer (120) is deposited on the substrate (G).

According to one embodiment of the present invention, the target (34) disposed on the target support (31) is chromium (Cr).

A control unit (33) is disposed on the upper left side of the chamber (13). The pretreatment current, pretreatment pressure, pretreatment power, and film formation pressure are controlled by the control unit (33).

The sputtering voltage according to the embodiment of the present invention refers to the voltage at the power supply unit (32).

Hereinafter, the present invention will be specifically described through examples and comparative examples. However, the following examples are only intended to help understanding the present invention, and the scope of the present invention is not limited to these examples.

### Example 1

After preparing a metal substrate made of aluminum, a lead tab having a thickness of 300 µm was manufactured by forming a metal layer with a thickness of 20 nm on the metal substrate using a sputtering process. Chromium (Cr) metal was used as the target during the sputtering process, and the sputtering voltages are shown in Table 1 below.

### Example 2

A lead tab was manufactured using the same method as Example 1, except for the conditions of the sputtering voltage for forming the metal layer.

### Example 3

A lead tab was manufactured using the same method as Example 1, except for the conditions of the sputtering voltage for forming the metal layer.

### Example 4

A lead tab was manufactured using the same method as Example 1, except for the conditions of the sputtering voltage for forming the metal layer.

### Example 5

A lead tab was manufactured using the same method as Example 1, except for the conditions of the sputtering voltage for forming the metal layer.

### Comparative Example 1

A lead tab having a thickness of 300 µm was manufactured using the same method as in Example 1, except for the formation of a 20 nm-thick protective layer, which was formed by immersing the aluminum metal substrate in a 0.06 M chromate solution at room temperature for 20 seconds, drying it at room temperature for 10 seconds, rinsing with distilled water for 10 seconds, immersing again in the 0.06 M chromate solution at room temperature for 10 seconds, drying again at room temperature for 10 seconds, rinsing with distilled water for 10 seconds, and then drying for 15 seconds.

### Comparative Example 2

A lead tab was manufactured using the same method as in Comparative Example 1, except for the formation of a 20 nm-thick protective layer, which was formed by immersing the metal substrate in a 0.06 M chromate solution at room temperature for 15 seconds, drying it at room temperature for 10 seconds, rinsing with distilled water for 10 seconds, immersing again in the 0.06 M chromate solution at room temperature for 10 seconds, drying at room temperature for 10 seconds, rinsing with distilled water for 10 seconds, and then drying for 15 seconds.

### Comparative Example 3

A lead tab was manufactured using the same method as in Comparative Example 1, except for the formation of a 20 nm-thick protective layer, which was formed by immersing the metal substrate in a 0.06 M chromate solution at room temperature for 20 seconds, drying it at room temperature for 15 seconds, rinsing with distilled water for 10 seconds, immersing again in the 0.06 M chromate solution at room temperature for 10 seconds, drying at room temperature for 10 seconds, rinsing with distilled water for 10 seconds, and then drying for 15 seconds.

### Comparative Example 4

A lead tab was manufactured using the same method as in Comparative Example 1, except for the formation of a 20 nm-thick protective layer, which was formed by immersing the metal substrate in a 0.06 M chromate solution at room temperature for 20 seconds, drying it at room temperature for 10 seconds, rinsing with distilled water for 10 seconds, immersing again in the 0.06 M chromate solution at room temperature for 20 seconds, drying at room temperature for 10 seconds, rinsing with distilled water for 10 seconds, and then drying for 15 seconds.

### Comparative Example 5

A lead tab was manufactured using the same method as in Comparative Example 1, except for the formation of a 20 nm-thick protective layer, which was formed by immersing the metal substrate in a 0.06 M chromate solution at room temperature for 20 seconds, drying it at room temperature for 10 seconds, rinsing with distilled water for 10 seconds, immersing again in the 0.06 M chromate solution at room temperature for 10 seconds, drying at room temperature for 5 seconds, rinsing with distilled water for 10 seconds, and then drying for 15 seconds.

The ultrasonic welding strength of the lead tab depending on whether the metal layer was formed by the sputtering process in the above Examples 1 to 5 and Comparative Examples 1 to 5 is as shown in Table 1 below.

**[Table 1]**

| | Whether the metal layer is formed by a sputtering process | Sputtering Voltage (V) | Ultrasonic welding strength (kgf/mm²) |
|---|---|---|---|
| Example 1 | O | 364 | 83.35 |
| Example 2 | O | 365 | 87.70 |
| Example 3 | O | 361 | 109.90 |
| Example 4 | O | 359 | 90.45 |
| Example 5 | O | 363 | 93.90 |
| Comparative Example 1 | X | - | 56.20 |
| Comparative Example 2 | X | - | 59.60 |
| Comparative Example 3 | X | - | 57.50 |
| Comparative Example 4 | X | - | 52.30 |
| Comparative Example 5 | X | - | 53.80 |

### i) Ultrasonic welding strength measurement

The samples of the lead tabs manufactured in Examples 1 to 5 and Comparative Examples 1 to 5 were ultrasonically welded (second ultrasonic welding step) with 30 sheets of aluminum foils that have been pre-welded, and then the tensile strength was measured.

At this time, the sample of the lead tab is cut to a size of 45 mm x 43 mm (width: 45 mm, length: 43 mm) from the lead tab manufactured in Examples 1 to 5 and Comparative Examples 1 to 5 and formed to a thickness of 300 *µ*m.

Each of the 30 sheets of aluminum foils that have been pre-welded has a size of 50 mm x 50 mm (width: 50 mm, length: 50 mm) and a thickness of 10 *µ*m, and the 30 sheets of aluminum foils that have been pre-welded are formed by overlapping 30 sheets of aluminum (Al) foil and performing ultrasonic welding (first ultrasonic welding step).

### <First ultrasonic welding step conditions>

Welding area: An area of 45 mm x 6 mm (width: 45 mm, length: 6 mm), specifically, the welding area is located on one side of the aluminum foil.
Welding energy: 400 J
Ultrasonic Welder: US-3620SLS from Tech-SONIC

### <Second ultrasonic welding step conditions>

Welding area: An area of 30 mm x 6 mm (width: 30 mm, length: 6 mm), specifically, the welding area is disposed on one side of 30 sheets of pre-welded aluminum foil.
Welding energy: 2400 W
Ultrasonic Welder: US-3620SLS from Tech-SONIC

### <Tensile strength measurement conditions>

Tensile strength was measured for welded lead tab samples and the 30 sheets of aluminum foils that have been pre-welded. In detail, the tensile strength is measured for samples in which the lead tab samples and the 30 sheets of aluminum foil that have been pre-welded are welded together.

Tensile strength can be measured by a universal testing machine (UTM) of ORIENTAL TM Co., Ltd. OTT-00. At this time, the lead tab sample is fixed to the upper jig with the 30 sheets of aluminum foils that have been pre-welded to the lower jig of the UTM to evaluate the tensile strength.
Angle: 180°
Peeling speed: 30 mm/min

Referring to Table 1, the following results can be confirmed.

In the case of lead tabs of Examples 1 to 5, in which a metal layer was formed on a metal substrate by a sputtering process, it can be seen that the ultrasonic welding strength is 70 kgf/mm² or greater.

On the other hand, in the case of lead tabs of Comparative Examples 1 to 5, in which a protective layer was formed on the metal substrate through chromate treatment without forming a metal layer by sputtering, it can be seen that the ultrasonic welding strength is less than 70 kgf/mm².

In addition to the effects mentioned above, other features and advantages of the present invention are described below or may be clearly understood by those skilled in the art to which the present invention pertains from such description and explanation.

According to the present invention, a lead tab with improved welding performance can be provided.

It will be apparent to those skilled in the art that the present disclosure described above is not limited by the above-described embodiments and the accompanying drawings and that various substitutions, modifications and variations can be made in the present disclosure without departing from the scope of the disclosures. Consequently, the scope of the present disclosure is defined by the accompanying claims and it is intended that all variations or modifications derived from the meaning, scope and equivalent concept of the claims fall within the scope of the present disclosure.

## Claims

1. A lead tab (10) comprising:
a metal substrate (110) including aluminum; and
a metal layer (120) disposed on both sides of the metal substrate (110);
wherein the metal layer (110) comprises 70 to 99.9 wt% of chromium and
wherein the lead tab (10) has an ultrasonic welding strength of 70 kgf/mm² or more.

2. The lead tab of claim 1, wherein the metal substrate (110) has a thickness of 100 to 1,000 µm.

3. The lead tab of claim 1 or 2, wherein the metal layer (120) has a thickness of 10 to 500 nm.

4. The lead tab of claim 1, 2 or 3, wherein the metal layer (120) is formed by a dry vacuum process.

5. The lead tab of claim 4, wherein the dry vacuum process comprises at least one of a sputtering process, an evaporation process, an ion plating process, and a CVD process.

6. A secondary battery (1) comprising the lead tab of any one of the preceding claims.
